# FASCICULE DE BREVET EUROPEEN

(11) **EP 3 608 590 B1**
(45) Date de publication et mention de la délivrance du brevet: **23.10.2024**
(21) Numéro de dépôt: 19188676.1
(22) Date de dépôt: 26.07.2019
(51) Int. Cl.: F21V 33/00, F21V 5/02, F21V 21/00, F21V 8/00

(54) **DALLE D'ECLAIRAGE ULTRAPLATE**
ULTRAFLACHE BELEUCHTUNGSPLATTE
ULTRAFLAT LIGHTING TILE

(30) Priorité: 09.08.2018 FR 1857403
(43) Date de publication de la demande: 12.02.2020
(73) Titulaire: Display Light, 82000 Montauban (FR)
(72) Inventeur: AZORIN, Didier, 82000 MONTAUBAN (FR)
(74) Mandataire: Argyma

(56) Documents cités:
- EP-A1- 1 666 933
- EP-A1- 2 835 574
- WO-A1-2014/119148
- WO-A1-2015/173516
- WO-A1-2018/130429
- FR-A1- 2 955 539
- US-A1- 2008 037 284
- US-A1- 2013 250 559
- US-A1- 2017 090 105

## Description

### DOMAINE TECHNIQUE ET OBJET DE L'INVENTION

La présente invention se rapporte au domaine de l'éclairage et concerne plus particulièrement une dalle d'éclairage ultraplate à LED. L'invention vise notamment à permettre une utilisation aisée d'une dalle d'éclairage à LED dans un élément de signalétique réalisé en tissu.

### ETAT DE LA TECHNIQUE

Dans le domaine de la signalétique, il est connu d'utiliser différents types de supports. Il est notamment connu d'utiliser des lambrequins fixés sur des stores, appelés « lambrequins de store ».

Dans une solution existante de lambrequin de store, il est connu d'insérer une dalle d'éclairage à l'intérieur d'un lambrequin réalisé en tissu et dans lequel sont formés, au droit de ladite dalle d'éclairage, des ouvertures, représentant par exemple des lettres, à travers lesquelles se propage la lumière émise par la dalle d'éclairage. Une telle dalle d'éclairage est décrite dans le document WO 2018/130429 A1.

L'inconvénient des dalles d'éclairage existantes réside dans leur épaisseur. En effet, dans une solution courante de dalle existante, la dalle comprend un cadre métallique rectangulaire ou carré définissant une cavité, fermée d'un côté par une plaque opaque et de l'autre par une plaque opalescente, dans laquelle sont montées une ou plusieurs bandes de diodes électroluminescentes de sorte que la lumière rebondisse sur les parois du cadre et sur la plaque opaque de manière à ressortir de la dalle par la plaque opalescente.

L'épaisseur d'une telle dalle d'éclairage étant en moyenne supérieure à 3 cm, ce type de dalle rend le lambrequin de store épais et inesthétique. De plus, ce type de dalle d'éclairage peut présenter une masse relativement importante, notamment conférée par le cadre métallique, ce qui peut endommager le store sur lequel est fixé le lambrequin.

Il existe donc le besoin d'une solution simple, fiable et efficace permettant de remédier au moins en partie aux inconvénients précités.

### PRESENTATION GENERALE DE L'INVENTION

A cet effet, l'invention a tout d'abord pour objet une dalle d'éclairage ultraplate, ladite dalle d'éclairage comprenant une plaque de diffusion de lumière, la dalle d'éclairage étant remarquable en ce qu'elle comprend en outre au moins une bande de support, s'étendant selon un plan parallèle au plan longitudinal de la plaque de diffusion, et au moins une bande de diodes électroluminescentes montée sur ladite au moins une bande de support au droit d'au moins une tranche de la plaque de diffusion de sorte à émettre la lumière des diodes électroluminescentes dans ladite tranche.

L'au moins une bande de diodes électroluminescentes s'étend ainsi dans le prolongement (i.e. dans l'épaisseur) de la plaque de diffusion, ce qui permet de limiter l'épaisseur de la dalle sensiblement à l'épaisseur de la plaque de diffusion. L'au moins une bande de support est un moyen simple, fiable et efficace pour fixer l'au moins une bande de diodes électroluminescentes et s'assurer que les diodes électroluminescentes projettent leur lumière dans la tranche de la plaque de diffusion, notamment en étant positionnée à une distance de la tranche. Une telle configuration permet de réduire significativement l'épaisseur de la dalle d'éclairage, par exemple à une valeur inférieure à 1 cm, de préférence inférieure à 6 mm, selon notamment l'épaisseur de la plaque de diffusion.

De préférence, la distance entre les diodes électroluminescentes et la tranche de la plaque de diffusion est inférieure à 2 mm afin de permettre une diffusion efficace de la lumière dans la plaque de diffusion.

Avantageusement, l'épaisseur de la plaque de diffusion est de préférence inférieure à 1 cm, de préférence inférieure à 5 mm, de préférence encore de l'ordre de 2 mm.

De préférence encore, la plaque de diffusion est de forme rectangulaire ou carrée.

Avantageusement, l'au moins une bande de support est montée sur une face de la plaque de diffusion de manière à s'étendre d'un bord de ladite plaque de diffusion.

Selon l'invention, au moins une bande de diodes électroluminescentes est montée sur une longueur de la plaque de diffusion.

Selon un aspect de l'invention, l'au moins une bande de diodes électroluminescentes est étanche, par exemple à l'aide d'un revêtement siliconé.

Dans une première forme de réalisation, l'une des deux faces de la plaque de diffusion étant dite d'émission de la lumière et l'autre face étant dite de blocage de la lumière, la dalle d'éclairage comprend en outre une plaque opalescente s'étendant sur (i.e. au droit de) la face d'émission de la plaque de diffusion, de préférence sur l'intégralité de la surface de la face d'émission de la plaque de diffusion. La plaque opalescente permet notamment d'améliorer la diffusion de la lumière et de masquer d'éventuels marquages apparaissant sur la plaque de diffusion, par exemple des points noirs issus de la fabrication de la plaque de diffusion par laser.

La plaque opalescente peut par exemple être réalisée en un polymère thermoplastique, par exemple en polychlorure de vinyle PVC, en polyméthacrylate de méthyle (plexiglas) ou en polycarbonate.

De préférence, l'épaisseur de la plaque opalescente est inférieure ou égale à 2 mm.

De préférence, un espace peut être formé entre la plaque de diffusion et la plaque opalescente, par exemple compris entre 1 et 2 mm, afin d'améliorer la diffusion de la lumière vers l'extérieur de la dalle d'éclairage et d'améliorer le masquage d'éventuels marquages.

De manière avantageuse, la dalle d'éclairage comprend en outre une couche opaque s'étendant sur la face de blocage de la plaque de diffusion, par exemple fixée par collage sur la face de blocage de la plaque de diffusion. La couche opaque peut notamment être une feuille, dont l'épaisseur est inférieure ou égale à 1 mm, ou une plaque dont l'épaisseur est supérieure à 1 mm. La couche opaque peut être réalisée en polychlorure de vinyle (PVC), en polyméthacrylate de méthyle (plexiglas) ou en polycarbonate.

Avantageusement encore, la dalle d'éclairage comprend en outre un film noir ou un diffus translucide s'étendant sur la face de la couche opaque opposée à la face de contact avec la face de blocage de la plaque de diffusion, afin de bloquer totalement la lumière. De préférence, le film noir ou le diffus translucide s'étend de préférence sur l'intégralité de ladite surface de la couche opaque.

Dans une deuxième forme de réalisation, les deux faces de ladite dalle d'éclairage étant dites d'émission de la lumière, la dalle d'éclairage comprend en outre une première plaque opalescente, s'étendant sur l'une des faces d'émission de la plaque de diffusion, et une deuxième plaque opalescente, s'étendant sur l'autre face d'émission de la plaque de diffusion.

De préférence, un espace peut être formé, d'une part, entre la plaque de diffusion et la première plaque opalescente, et, d'autre part, entre la plaque de diffusion et la deuxième première plaque opalescente afin d'améliorer la diffusion de la lumière vers l'extérieur de la dalle d'éclairage à travers ses deux faces.

Selon l'invention, la dalle d'éclairage comprend en outre au moins une bande opaque recouvrant l'au moins une bande de diodes électroluminescentes de sorte que ladite au moins une bande de diodes électroluminescentes soit disposée entre la tranche de la plaque de diffusion, au droit de laquelle ladite au moins une bande de diodes électroluminescentes s'étend, et ladite au moins une bande opaque. La bande opaque peut par exemple être réalisée en aluminium ou en un matériau adhésif opaque. De préférence, la bande opaque est fixée sur l'intégralité de la tranche de la dalle d'éclairage de manière à la rendre étanche et à maintenir les éléments de la dalle, notamment la ou les plaques opalescentes et la couche opaque le cas échéant.

L'invention concerne enfin une pièce de tissu comprenant au moins deux épaisseurs formant au moins une poche dans laquelle est insérée une dalle d'éclairage telle que décrite ci-avant. La pièce de tissu peut être un élément d'une enseigne, par exemple de type lambrequin de store, oriflamme ou drapeau murale ou bien une toile d'un objet tel que, par exemple, un parasol. De préférence, la pièce de tissu est une toile de store réalisée par exemple en acrylique et/ou en polyester.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- la figure 1 illustre schématiquement une forme de réalisation d'un lambrequin de store comprenant une dalle d'éclairage selon l'invention,
- la figure 2 est une vue en transparence partielle du lambrequin de store de la figure 1,
- la figure 3 illustre schématiquement un exemple de dalle d'éclairage selon l'invention,
- la figure 4 est une vue partielle rapprochée et de côté de la dalle d'éclairage de la figure 3,
- la figure 5 illustre une première forme de réalisation de la dalle d'éclairage de la figure 3,
- la figure 6 illustre une deuxième forme de réalisation de la dalle d'éclairage de la figure 3.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

La dalle d'éclairage selon l'invention peut être avantageusement insérée dans un élément en tissu, tel que par exemple un lambrequin de store, une oriflamme, un drapeau mural ou une toile de parasol. Bien entendu, tout autre type d'éclairage est également visé par la présente demande de brevet, notamment l'éclairage de faux plafond, de panneaux, de murs, etc.

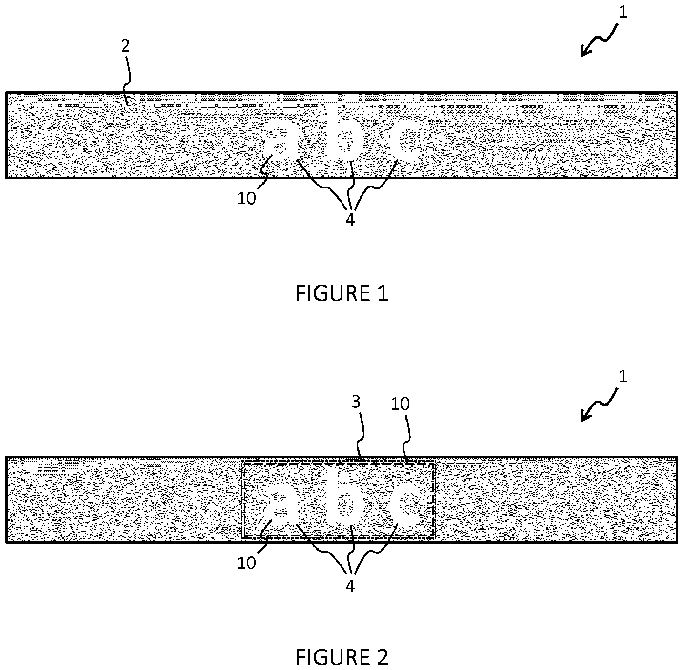

On a représenté sur la figure 1 et sur la figure 2 un exemple de lambrequin 1 de store comportant une pièce en tissu 2 dans laquelle est formée une poche 3. Des ouvertures 4 en forme de lettres « a b c » sont formées sur une face de la pièce de tissu 2 et une dalle d'éclairage 10 selon l'invention est insérée dans la poche 3.

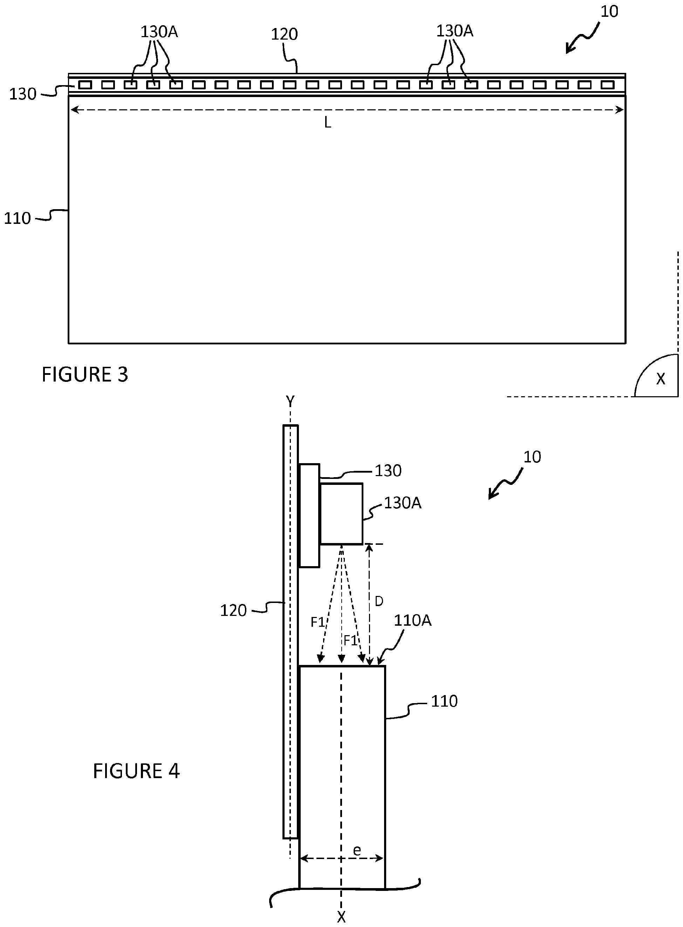

On a représenté sur la figure 3 et la figure 4 une vue partielle d'un exemple de dalle d'éclairage 10 selon l'invention. La dalle d'éclairage 10 selon l'invention est une dalle d'éclairage 10 ultraplate utilisant la technologie LED (pour DEL ou diodes électroluminescentes en langue française) connue en soi.

Dans cet exemple non limitatif, la dalle d'éclairage 10 comprend une plaque de diffusion 110 de lumière, une bande de support 120 et une bande de diodes électroluminescentes 130 comportant une pluralité de diodes électroluminescentes 130A, de préférence disposées régulièrement sur toute la longueur L de la plaque de diffusion 110.

En référence à la figure 4, la plaque de diffusion 110 de lumière comprend une tranche 110A définissant l'épaisseur e de ladite plaque de diffusion 110. De préférence, l'épaisseur e de la plaque de diffusion 110 est inférieure à 1 cm, de préférence inférieure à 5 mm, de préférence de l'ordre de 2 mm.

Dans cet exemple préféré, la plaque de diffusion 110 est de forme rectangulaire et comprend deux faces opposées l'une à l'autre. On notera que, dans une autre forme de réalisation, la plaque de diffusion 110 mais pourrait présenter toute autre forme (carrée, circulaire,...).

La bande de support 120 est fixée, au niveau d'une zone de fixation, sur une face de la plaque de diffusion 110, de préférence sur toute sa longueur L, par exemple par collage, de sorte à s'étendre, au niveau d'une zone libre, d'un bord de la plaque de diffusion 110, selon un plan Y parallèle au plan longitudinal X de la plaque de diffusion 110. De préférence, l'épaisseur de la bande de support 120 est comprise entre 0,5 et 2 mm. La bande de support 120 peur par exemple être réalisée en un matériau plastique.

La bande de diodes électroluminescentes 130 est fixée sur la bande de support 120, au niveau de son extrémité libre, par exemple par collage, de sorte à s'étendre au droit (i.e. en regard) de la tranche 110A de la plaque de diffusion 110 et de sorte que les diodes électroluminescentes 130A émettent notamment un flux F1 de lumière dans ladite tranche 110A lorsqu'elles sont alimentées électriquement. De préférence, la bande de diodes électroluminescentes 130 est étanchéifiée, par exemple à l'aide d'un revêtement en silicone. Une distance D est formée entre les diodes électroluminescentes 130A et le bord de la tranche 110A. De préférence encore, la distance D entre les diodes électroluminescentes 130A et la tranche 110A de la plaque de diffusion 110 est inférieure à 3 mm, de préférence inférieure à 2 mm.

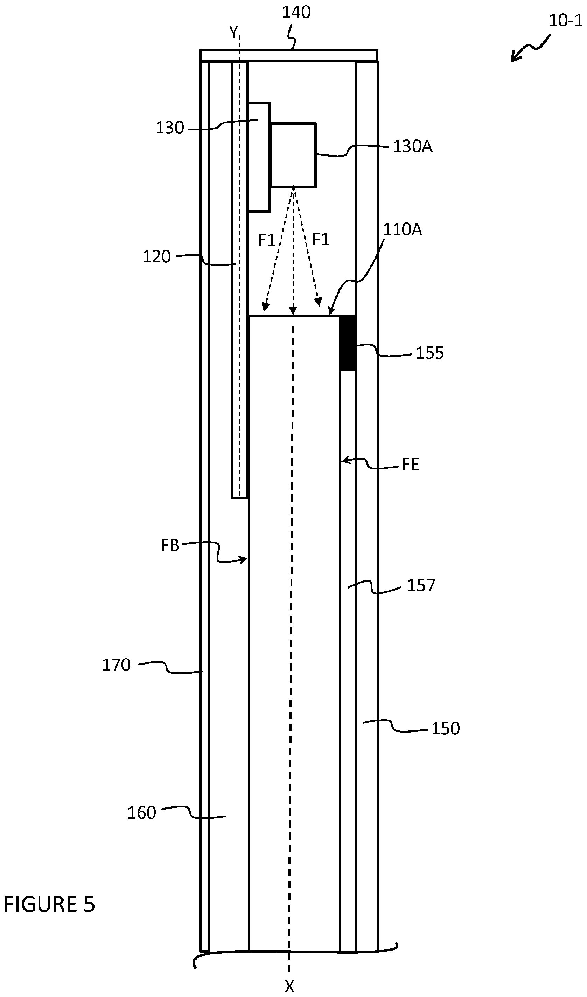

On a représenté à la figure 5 une première forme de réalisation de la dalle d'éclairage 10-1 selon l'invention. Dans cette forme de réalisation, la dalle d'éclairage 10-1 émet de la lumière vers l'extérieur à travers une seule de ses deux faces. Une face de la plaque de diffusion 110 est désignée « face d'émission » FE, l'autre face de la plaque de diffusion 110 étant désignée « face de blocage » FB.

A cette fin, la dalle d'éclairage 10-1 comprend une bande opaque 140, réalisée par exemple en aluminium, fixée sur toute la longueur de la bande de support 120 de sorte que ladite bande de diodes électroluminescentes 130 soit disposée entre la tranche 110A de la plaque de diffusion 110, au droit de laquelle ladite bande de diodes électroluminescentes 130 s'étend, et ladite bande opaque 140.

Toujours en référence à la figure 5, la dalle d'éclairage 10-1 comprend une plaque opalescente 150 et une couche opaque 160.

La plaque opalescente 150 s'étend sur l'intégralité de la surface de la face d'émission FE de la plaque de diffusion 110 et a pour fonction d'améliorer la diffusion de la lumière et, lorsque la plaque de diffusion 110 comporte des marquages, par exemple des points noirs dus à sa fabrication au laser, de masquer lesdits marquages de l'extérieur de la dalle d'éclairage 10-1. La plaque opalescente 150 peut par exemple être réalisée en PVC, plexiglas ou en polycarbonates. De préférence, l'épaisseur de la plaque opalescente 150 est inférieure à 2 mm.

Dans cet exemple, la plaque opalescente 150 est fixée sur la plaque de diffusion 110 à l'aide d'un ruban 155 adhésif double face. Un tel ruban 155, de préférence disposé sur toute la périphérie de la face d'émission FE de la plaque de diffusion 110, permet de former un espace 157 entre la plaque de diffusion 110 et la plaque opalescente 150, par exemple de 1 à 2 mm, ce qui améliore la diffusion de la lumière vers l'extérieure de la dalle d'éclairage 10-1 et permet d'améliorer le masquage d'éventuels marquages réalisés sur la plaque de diffusion 110 afin de les rendre invisibles de l'extérieur de la dalle d'éclairage 10-1.

Dans cet exemple, la plaque opalescente 150 s'étend jusqu'à hauteur de la bande de support 120 et la bande opaque 140 recouvre à la fois la tranche de la bande de support 120 et la tranche de la plaque opalescente 150 de manière à bloquer la lumière du côté opposé à la tranche 110A de la plaque de diffusion 110 afin que la lumière émise par les diodes électroluminescentes 130A soit dirigées essentiellement dans la tranche 110A de la plaque de diffusion 110. La bande opaque 140 peut avantageusement être disposée sur toute la surface latérale (i.e. la tranche) de la dalle d'éclairage 10-1 afin de la rendre étanche et de maintenir les éléments de la dalle d'éclairage 10-1 entre eux, notamment la plaque opalescente 150 et la couche opaque 160.

De préférence, la couche opaque 160 s'étend sur l'intégralité de la surface de la face de blocage FB de la plaque de diffusion 110. La couche opaque 160 peut notamment être fixée sur la face de blocage FB de la plaque de diffusion 110, par exemple par collage. La couche opaque 160 a pour fonction de bloquer la majeure partie de la lumière émise par les diodes électroluminescentes 130A dans la plaque de diffusion 110. La couche opaque 160 peut par exemple être réalisée en polychlorure de vinyle (PVC), en plexiglas ou en polycarbonates. De préférence, l'épaisseur de la couche opaque 160 est inférieure ou égale à 1 mm.

De manière optionnelle, comme illustré sur la figure 5, un film noir ou un diffus translucide 170 peut être fixé sur la face de la couche opaque 160 qui est opposée à la face s'étendant en regard de la surface de la face de blocage FB de la plaque de diffusion 110 afin de bloquer les rayons lumineux qui auraient pu traverser la couche opaque 160. Dans l'exemple de la figure 5, le film noir ou le diffus translucide 170 recouvre également la couche opaque 160. De préférence, l'épaisseur du film noir ou du diffus translucide 170 est inférieure à 1 mm.

Dans cet exemple, la bande de support 120 est bloquée entre la couche opaque 160 et la plaque de diffusion 110, par exemple par pincement, avec ou sans collage. On notera que dans une autre forme de réalisation de la dalle d'éclairage 10-1, la bande de support 120 pourrait être fixée sur la couche opaque 160 ou directement sur la tranche de la plaque de diffusion 110.

La dalle d'éclairage 10 selon l'invention est particulièrement adaptée pour être insérée dans une poche formée dans une pièce de tissu telle que, par exemple, une enseigne de type lambrequin de store 1 ou drapeau. Dans de telles utilisations, il peut être nécessaire d'émettre de la lumière sur les deux faces de l'enseigne. Par exemple, dans le cas d'une enseigne de type drapeau mural ou lambrequin de store 1, on peut vouloir éclairer l'enseigne sur ses deux faces.

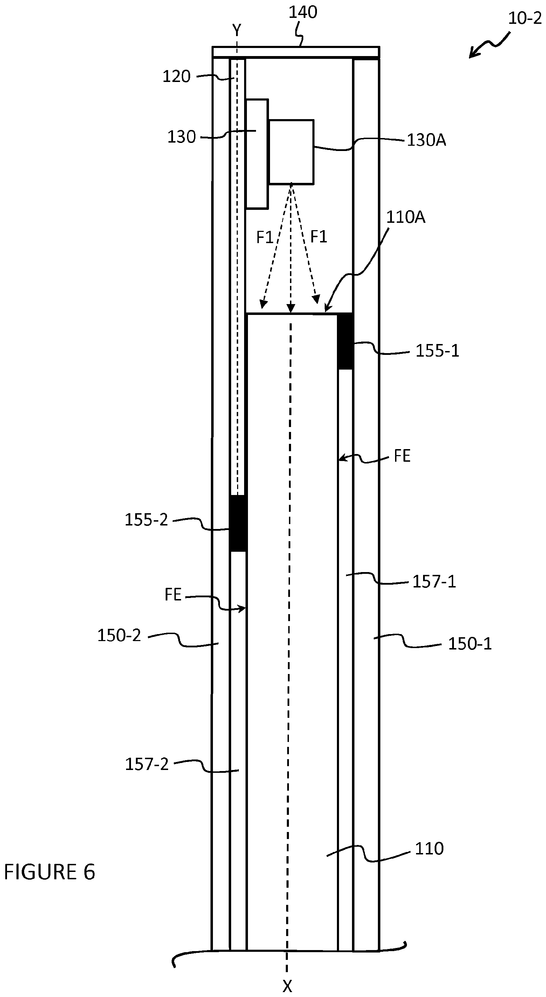

On a représenté à la figure 6 une deuxième forme de réalisation de la dalle d'éclairage 10-2 selon l'invention. Dans cette forme de réalisation, la dalle d'éclairage 10-2 émet de la lumière vers l'extérieur à travers ses deux faces. Dans cette configuration, les deux faces de la plaque de diffusion 110 sont des faces dites d'émission FE de lumière.

Dans cette configuration, la dalle d'éclairage 10-2 comprend, outre la plaque de diffusion 110, la bande de support 120 et la bande de diodes électroluminescentes 130, une bande opaque 140, une première plaque opalescente 150-1 et une deuxième plaque opalescente 150-2.

La première plaque opalescente 150-1 s'étend sur l'intégralité de la surface de la face d'émission FE de la plaque de diffusion 110 en regard de laquelle elle s'étend. La première plaque opalescente 150-1 peut par exemple être réalisée en PVC, plexiglas ou en polycarbonates. De préférence, l'épaisseur de la première plaque opalescente 150-1 est inférieure à 2 mm.

Dans cet exemple, la première plaque opalescente 150-1 est fixée sur la plaque de diffusion 110 à l'aide d'un ruban 155-1 adhésif double face. Un tel ruban 155-1, de préférence disposé sur toute la périphérie de la face d'émission FE, permet de former un espace 157-1 entre la plaque de diffusion 110 et la première plaque opalescente 150-1, par exemple de 1 à 2 mm, ce qui améliore la diffusion de la lumière vers l'extérieure de la dalle d'éclairage 10-2 à travers ladite première plaque opalescente 150-1 et permet de masquer d'éventuels marquages réalisés sur la plaque de diffusion 110. Dans cet exemple préféré, la première plaque opalescente 150-1 s'étend jusqu'à hauteur de la bande de support 120.

La deuxième plaque opalescente 150-2 s'étend sur l'intégralité de la surface de l'autre face d'émission FE de la plaque de diffusion 110, en regard de laquelle elle s'étend. La deuxième plaque opalescente 150-2 peut par exemple être réalisée en PVC, plexiglas ou en polycarbonates. De préférence, l'épaisseur de la deuxième plaque opalescente 150-2 est inférieure à 2 mm.

Dans cet exemple, la deuxième plaque opalescente 150-2 est fixée sur la plaque de diffusion 110 à l'aide d'un ruban 155-2 adhésif double face. Un tel ruban 155-2, de préférence disposé sur toute la périphérie de la face d'émission FE, permet de former un espace 157-2 entre la plaque de diffusion 110 et la deuxième plaque opalescente 150-2, par exemple de 1 à 2 mm, ce qui améliore la diffusion de la lumière vers l'extérieure de la dalle d'éclairage 10-2 à travers ladite deuxième plaque opalescente 150-2.

La deuxième plaque opalescente 150-2 s'étend jusqu'à hauteur de la bande de support 120 et la bande opaque 140 recouvre à la fois la tranche de la bande de support 120, la tranche de la première plaque opalescente 150-1 et la tranche de la deuxième plaque opalescente 150-2 de manière à bloquer la lumière du côté opposé à la tranche 110A de la plaque de diffusion 110 afin que la lumière émise par les diodes électroluminescentes 130A soit dirigées essentiellement dans la tranche 110A de la plaque de diffusion 110. La bande opaque 140 peut avantageusement être disposée sur toute la surface de la tranche (i.e. toute la surface latérale) de la dalle d'éclairage 10-2 afin de la rendre étanche et de fermer la dalle d'éclairage 10-2 en maintenant la première plaque opalescente 150-1 et la deuxième plaque opalescente 150-2.

Dans cet exemple, la bande de support 120 est bloquée entre la deuxième plaque opalescente 150-2 et la plaque de diffusion 110, par exemple par pincement, avec ou sans collage. On notera que dans une autre forme de réalisation de la dalle d'éclairage 10-2, la bande de support 120 pourrait être fixée sur la couche opaque 160 ou directement sur la tranche de la plaque de diffusion 110.

La dalle d'éclairage 10 selon l'invention présente ainsi avantageusement une épaisseur inférieure à 1 cm, de préférence inférieure à 6 mm de manière notamment à être aisément insérée dans une poche réalisée entre deux épaisseurs de tissu, en particulier dans une enseigne de type lambrequin de store, oriflamme, drapeau murale ou bien dans une toile de parasol.

La présente invention ne se limite pas seulement aux formes de réalisation décrites dans le présent document. On notera en particulier que les formes et les dimensions des éléments de la dalle d'éclairage pourraient être différentes sans que cela ne soit limitatif de la portée de la présente invention.

## Revendications

1. Dalle d'éclairage (10) ultraplate, ladite dalle d'éclairage (10) comprenant une plaque de diffusion (110) de lumière, la dalle d'éclairage (10) comprenant en outre au moins une bande de support (120), s'étendant selon un plan (Y) parallèle au plan longitudinal (X) de la plaque de diffusion (110), et au moins une bande de diodes électroluminescentes (130) montée sur ladite au moins une bande de support (120) au droit d'au moins une tranche (110A) de la plaque de diffusion (110) sur une longueur (L) de ladite plaque de diffusion (110) de sorte à émettre la lumière des diodes électroluminescentes (130A) dans ladite tranche (110A), la dalle (10) comprenant en outre au moins une bande opaque (140) recouvrant l'au moins une bande de diodes électroluminescentes (130) de sorte que ladite au moins une bande de diodes électroluminescentes (130) soit disposée entre la tranche (110A) de la plaque de diffusion, (110) au droit de laquelle ladite au moins une bande de diodes électroluminescentes (130) s'étend, et ladite au moins une bande opaque (140), la dalle (10) comprenant une plaque opalescente (150, 150-1, 150-2) sur au moins une de ses deux faces, ladite au moins une face étant une face dite d'émission de la lumière.

2. Dalle d'éclairage (10) selon la revendication 1, dans laquelle la distance (D) entre les diodes électroluminescentes (130A) et la tranche (110A) de la plaque de diffusion est inférieure à 2 mm.

3. Dalle d'éclairage (10) selon l'une quelconque des revendications précédentes, dans laquelle l'au moins une bande de diodes électroluminescentes (130) est étanche.

4. Dalle d'éclairage (10-1) selon l'une quelconque des revendications précédentes, l'une des deux faces de la plaque de diffusion (110) étant dite d'émission (FE) de la lumière et l'autre face étant dite de blocage (FB) de la lumière, ladite dalle d'éclairage (10-1) comprend en outre une plaque opalescente (150) s'étendant sur la face d'émission (FE) de la plaque de diffusion (110).

5. Dalle d'éclairage (10-1) selon la revendication précédente, ladite dalle d'éclairage (10-1) comprenant en outre une couche opaque (160) s'étendant sur la face de blocage (FB) de la plaque de diffusion (110).

6. Dalle d'éclairage (10-1) selon la revendication précédente, comprenant en outre un film noir ou un diffus translucide (170) s'étendant sur la couche opaque (160).

7. Dalle d'éclairage (10-2) selon l'une quelconque des revendications 1 à 3, les deux faces de ladite dalle d'éclairage (10-2) étant dites d'émission (FE) de la lumière, ladite dalle d'éclairage (10-2) comprend en outre une première plaque opalescente (150-1), s'étendant sur l'une des faces d'émission (FE) de la plaque de diffusion (110), et une deuxième plaque opalescente (150-2), s'étendant sur l'autre face d'émission (FE) de la plaque de diffusion (110).

8. Ensemble comprenant une dalle d'éclairage (10) selon l'une quelconque des revendications 1 à 7 et une pièce de tissu (2) comprenant au moins deux épaisseurs formant au moins une poche (3) dans laquelle est insérée ladite dalle d'éclairage (10).

## Patentansprüche

1. Ultraflache Beleuchtungsplatte (10), wobei die Beleuchtungsplatte (10) eine Lichtdiffusionstafel (110) umfasst, wobei die Beleuchtungsplatte (10) ferner mindestens einen Trägerstreifen (120) umfasst, der sich in einer Ebene (Y) parallel zur Längsebene (X) der Diffusionstafel (110) erstreckt, und mindestens einen Leuchtdiodenstreifen (130), der an dem mindestens einen Trägerstreifen (120) an mindestens einer Kante (110A) der Diffusionstafel (110) auf einer Länge (L) der Diffusionstafel (110) angebracht ist, so dass das Licht der Leuchtdioden (130A) in die Kante (110A) emittiert wird, wobei die Platte (10) ferner mindestens einen lichtundurchlässigen Streifen (140) umfasst, der den mindestens einen Leuchtdiodenstreifen (130) bedeckt, so dass der mindestens eine Leuchtdiodenstreifen (130) zwischen der Kante (110A) der Diffusionstafel (110), an der sich der mindestens eine Leuchtdiodenstreifen (130) erstreckt, und dem mindestens einen lichtundurchlässigen Streifen (140) angeordnet ist, wobei die Platte (10) ferner eine opaleszierende Tafel (150, 150-1, 150-2) auf mindestens einer ihrer beiden Flächen umfasst, wobei die mindestens eine Fläche eine sogenannte lichtaussendende Fläche ist.

2. Beleuchtungsplatte (10) nach Anspruch 1, wobei der Abstand (D) zwischen den Leuchtdioden (130A) und der Kante (110A) der Diffusionstafel weniger als 2 mm beträgt.

3. Beleuchtungsplatte (10) nach einem der vorhergehenden Ansprüche, wobei der mindestens eine Leuchtdiodenstreifen (130) dicht ist.

4. Beleuchtungsplatte (10-1) nach einem der vorhergehenden Ansprüche, wobei eine der beiden Flächen der Diffusionstafel (110) als Lichtemissionsfläche (FE) und die andere Fläche als Lichtsperrfläche (FB) bezeichnet wird, wobei die Beleuchtungsplatte (10-1) ferner eine opaleszierende Tafel (150) umfasst, die sich über der Emissionsfläche (FE) der Diffusionstafel (110) erstreckt.

5. Beleuchtungsplatte (10-1) nach vorhergehendem Anspruch, wobei die Beleuchtungsplatte (10-1) ferner eine lichtundurchlässige Schicht (160) umfasst, die sich über der Sperrfläche (FB) der Diffusionstafel (110) erstreckt.

6. Beleuchtungsplatte (10-1) nach vorhergehendem Anspruch, ferner umfassend eine Schwarzfolie oder ein lichtdurchlässiges Diffus (170), das sich über der lichtundurchlässigen Schicht (160) erstreckt.

7. Beleuchtungsplatte (10-2) nach einem der Ansprüche 1 bis 3, wobei die beiden Flächen der Beleuchtungsplatte (10-2) als lichtemittierend (FE) bezeichnet werden, wobei die Beleuchtungsplatte (10-2) ferner eine erste opaleszierende Tafel (150-1) umfasst, die sich auf einer der Emissionsflächen (FE) der Diffusionstafel (110) erstreckt, und eine zweite opaleszierende Tafel (150-2), die sich auf der anderen Emissionsfläche (FE) der Diffusionstafel (110) erstreckt.

8. Anordnung, umfassend eine Beleuchtungsplatte (10) nach einem der Ansprüche 1 bis 7 und ein Gewebestück (2) mit mindestens zwei Lagen, die mindestens eine Tasche (3) bilden, in die die Beleuchtungsplatte (10) eingesetzt ist.

## Claims

1. Ultra-flat lighting panel (10), said lighting panel (10) comprising a light diffusion plate (110), the lighting panel (10) further comprising at least one support strip (120), extending along a plane (Y) parallel to the longitudinal plane (X) of the diffusion plate (110), and at least one light emitting diodes strip (130) mounted to said at least one support strip (120) facing at least one slice (110A) of the diffusion plate (110) on a length (L) of said diffusion plate (110) so as to emit light from the light emitting diodes (130A) into said slice (110A), the panel (10) further comprising at least one opaque strip (140) covering the at least one light emitting diode strip (130) such that said at least one light emitting diode strip (130) is disposed between the slice (110A) of the diffusion plate (110), flush with which said at least one light emitting diode strip (130) extends, and said at least one opaque strip (140), the panel (10) comprising an opalescent plate (150, 150-1, 150-2) on at least one of its two faces, said at least one face being a light emitting face (FE).

2. The lighting panel (10) according to claim 1, wherein the distance (D) between the light emitting diodes (130A) and the slice (110A) of the diffusion plate is less than 2 mm.

3. The lighting panel (10) according to any of the preceding claims, wherein the at least one light emitting diode strip (130) is sealed.

4. The lighting panel (10-1) according to any one of the preceding claims, one of both faces of the diffusion plate (110) being called a light emitting face (FE) and the other face being called a light-blocking face (FB), said lighting panel (10-1) further comprises an opalescent plate (150) extending on the light emitting face (FE) of the diffusion plate (110).

5. The lighting panel (10-1) according to the preceding claim, said lighting panel (10-1) further comprising an opaque layer (160) extending on the blocking face (FB) of the diffusion plate (110).

6. The lighting panel (10-1) according to the preceding claim, further comprising a black film or a translucent diffuse part (170) extending on the opaque layer (160).

7. The lighting panel (10-2) according to any one of claims 1 to 4, both faces of said lighting panel (10-2) being called light emitting faces (FE), said lighting panel (10-2) further comprises a first opalescent plate (150-1), extending on one of the emission faces (FE) of the diffusion plate (110), and a second opalescent plate (150-2), extending on the other emission face (FE) of the diffusion plate (110).

8. Assembly comprising a lighting panel (10) according to any one of claims 1 to 7 and a piece of fabric (2) comprising at least two thicknesses forming at least one pocket (3) into which said lighting panel (10) is inserted.
